**Europäisches Patentamt**

**European Patent Office**

**Office européen des brevets**

(11) Veröffentlichungsnummer:

# 0 247 962
## A2

(12) # EUROPÄISCHE PATENTANMELDUNG

(21) Anmeldenummer: **87730020.2**

(22) Anmeldetag: **23.02.87**

(51) Int. Cl.⁴: **B 23 Q 1/00, B 23 Q 1/02**

(30) Priorität: **29.05.86 DE 3618075**

(43) Veröffentlichungstag der Anmeldung: **02.12.87**
**Patentblatt 87/49**

(84) Benannte Vertragsstaaten: **AT CH DE ES FR GB IT LI SE**

(71) Anmelder: **MANNESMANN Aktiengesellschaft,
Mannesmannufer 2, D-4000 Düsseldorf 1 (DE)**

(72) Erfinder: **Stöber, Manfred, Dipl.-Ing., Am
Schichtmeister 3, D-5810 Witten (DE)**
Erfinder: **Staggl, Roland, Dr., Brunnenweg 6,
D-5802 Wetter 2 (DE)**
Erfinder: **Kaufmann, Karl Ernst, Ing., Hauptstrasse 59,
D-5802 Wetter 4 (DE)**
Erfinder: **Sprung, Hartwig, Am Brasberg 71,
D-5802 Wetter 4 (DE)**

(74) Vertreter: **Meissner, Peter E., Dipl.-Ing. et al,
Herbertstrasse 22, D-1000 Berlin 33 (DE)**

(54) **Abstützung eines Trägers.**

(57) Auf dem Boden (1) einer Werkhalle ist eine Fussplatte (3) einer Stütze (4) eines Roboterportals mit Schrauben (6) verankert. Der Raum zwischen der Fussplatte (3) und dem Boden (1) ist nach dem Ausrichten der Träger (8) und der Stützen (4) des Roboterportals mit Mörtel (2) ausgegossen. Die Fussplatte (3) hat zwei Gewindebohrungen für Justierschrauben (5), die sich einerseits mittels Druckplatten (21) auf dem Boden (1) abstützen und andererseits die Stütze (4) in geforderter Höhe und Winkellage tragen.

Der Träger (8) hat einen Querdurchbruch (11) in Form einer Bohrung für einen rohrförmigen Querträger (13), der auch durch einen weiteren runden Durchbruch (14) der Stütze (4) geführt ist und dort eingeschweisst sein kann. Die Bohrungen haben einen Passsitz für den Querträger, damit sich der Träger (8) nicht gegenüber den Stützen (4) verkantet.

Vier Stützen (4) tragen zwei Träger (8), an deren oberen und unteren Führungsschienen (9) Fahrwerke (20) mittels Führungsrollen (18) verfahrbar sind, die einen Fahrschemel (19) mit einer Vertikalhubachse tragen. Die Träger (8) werden mittels Querriegel auf Distanz gehalten.

EP 0 247 962 A2

Abstützung eines Trägers
------------------------

Die Erfindung befrifft eine Abstützung eines Trägers für ein Roboterportal neben mehreren Stützen.

Ein derartiges Roboterportal ist durch die DE-PS 32 43 335 bekannt. Die an den Stützen befestigten Konsolen für die Anbringung der Träger sind durch die erforderliche Bearbeitung teuer in der Herstellung und stehen beim Transport der Stützen zur Baustelle störend vor. Außerdem sind die Eckstützen mit anderen Konsolen als die dazwischen liegenden Feldstützen bestückt. Wenn der Träger als Kastenträger ausgebildet ist, dann kann beim Stützen-/Trägeranschluß der Feldstütze der Querkraftanteil aus dem Träger-Steg, der zur Stütze den größeren Abstand hat, nicht ohne Trägerquerschnittsverformung in die Feldstütze eingeleitet werden. Das führt zu einer Krümmung in den Führungsschienen bzw. zu überhöhten Sekundärspannungen im Trägerquerschnitt.

Aufgabe der Erfindung ist es daher, eine vereinfachte Abstützung eines Trägers an den Stützen zu schaffen. die bei gleicher Bauweise ohne nennenswerte Trägerquerschnittsverformung sowohl bei Eck- als auch bei Feldstützen verwendbar ist. Weiterhin soll der Montagevorgang für das gesamte Roboterportal (linien- oder flächendeckend) vereinfacht und qualitativ verbessert werden.

Diese Aufgabe wird dadurch gelöst, daß die Stützen und/oder der Träger Querdurchbrüche für den Träger tragende Querträger haben. Die Querträger sind an der Baustelle leicht zu montieren und können in einfacher Weise aus Rohren hergestellt sein, für die in den Stützen und dem Träger, der vorzugsweise ein Kastenträger ist, Bohrungen vorhanden sind. Diese Bohrungen können einen Paßsitz haben, so daß

......

0247962

- 2 -

die projizierte Fläche der Bohrung zum Übertragen der Auflagekräfte herangezogen wird. Die Flächenpressung bleibt dabei in zulässigen Grenzen. Der Querträger überträgt 50 % der Trägerquerkraft vom der Stütze abgewandten Steg und 50 % vom der Stütze zugekehrten Steg hin zu den Stützenwänden, ohne daß sich der Trägerquerschnitt in seiner Form verändert. Der Querträger übernimmt somit eine Querschottfunktion. Die Achse des Querträgers in Rundrohrform läßt sich exakt senkrecht zu den Führungsschienenflächen des Trägers beim Bohrvorgang ausrichten, so daß die Außenkontur des Trägers die üblichen Maßabweichungen aufweisen kann, ohne daß zum Anschluß an die Stütze eine bearbeitete Anschlagfläche notwendig ist. Die Bohrung in der Stütze für den Querträger wird ebenfalls senkrecht zu den Hauptachsen der Stütze gebohrt. Die Verbindung bildet außer der Tragfunktion des Querträgers eine Drehgelenkfunktion für einfaches Ausrichten bei der Montage sowie eine Verschiebefunktion für den Träger gegenüber der Stütze. Außer den Bohrungen für das Querträgerrohr in der Stütze und im Träger sind keine bearbeiteten Anschlagflächen nötig. Die bei der Werksmontage durch Anschweißen der Verbindungsstücke fixierte, gesamte, geometrische Situation bleibt bis zur Endmontage auf der Baustelle erhalten. Der Querträger kann auch aus vollem Rundmaterial hergestellt sein; er kann fest oder lösbar mit dem Träger oder der Stütze verbunden sein; er kann auch in eine Stahlbeton-Stütze oder Stahl-/Beton-Verbundstütze eingesetzt sein.

In weiterer Ausgestaltung der Erfindung kann der Träger im oberen und unteren Bereich in Längsrichtung verlaufende Einschiebenuten für Nutmuttern oder die Köpfe von Schrauben haben, die durch an den Stützen befestigte Anschraubsättel geführt sind. Diese stehen zum Träger über die Stützen vor und werden nach dem Ausrichten der Träger und Stützen mit diesen verschweißt. Der Träger ist vorzugsweise aus

Leichtmetall hergestellt und hat auf dem Obergurt und unter dem Untergurt Führungsschienen für Führungsrollen von Fahrwerden, die bei liniendeckenden Roboterportalen mit z.B. einer Vertikalhubachse und bei flächendeckenden Roboterportalen mit einem Fahrschemel verbunden sind. Zum genauen Ausrichten der Gesamtanlage sind die Stützen mit ihren Fußplatten über Justierschrauben sowohl zum Einstellen der Höhe als auch zum senkrechten Ausrichten genau einstellbar. Hierzu haben die Fußplatten große Bohrungen für Ankerschrauben oder Dübel, mit denen die Fußplatten auf dem Boden befestigt sind. Der Raum zwischen der Fußplatte und dem Boden wird nach dem Ausrichten der Stützen mit Mörtel ausgegossen. Die Bohrungen sind zum Beispiel gegenüber dem Ankerschrauben- bzw. Dübel- Durchmesser um soviel größer, daß eine ausreichende Verschiebung in alle horizontalen Richtungen auf der Baustelle möglich ist. Die Muttern für die Ankerschrauben oder Dübel sitzen auf dicken Spezial-Scheiben, die den großen Durchmesser der Ankerschrauben- bzw. Dübellöcher überbrücken. So ist es auf der Baustelle möglich, daß die Ankerschrauben (oder Klebeanker) vor dem Aufstellen der Stützen z.B. mit Hilfe von Schablonen (Lochbild) und Messung fertig vergossen werden können. Die Justierschrauben sind parallel zur Querträgerachse exakt mittig unter dem Querträger vor und hinter den Stützen mittels Gewinde in der Fußplatte angeordnet. Die Justierschrauben übertragen beim Ausrichten der Stützen deren Kräfte über die Druckplatten auf z.B. den Hallenboden. Mittels der differenzierten Schraubbewegungen der Justierschrauben wird zusammen mit der weiteren Gestaltung der Fußplatte erreicht, daß die Stütze zunächst in der Höhe und in beiden Ebenen zur Vertikalachse so exakt ausgerichtet werden kann, daß der Querträger bis auf seine Längsausrichtung und Querausrichtung seine endgültige Lage erhält und daß nach Montage des Trägers die Stütze längs und quer verschoben werden kann, ohne daß sich Höhe und Winkellage des Querträgers ändern. Sind

. . . . .

- 4 -

die Stützen und Träger untereinander fertig ausgerichtet, erfolgt das Anschrauben der Anschraubsättel mittels Schrauben, die in die längs der Nuten verschiebbare Nutmuttern geschraubt werden, so daß die Anschraubsättel eng an der Stütze anliegen und angeschweißt werden können. Nach dem Anschweißen der Anschraubsättel erfolgt das Anziehen der Muttern der Ankerschrauben, Klebeanker oder Dübel mit vorgeschriebenem Anziehdrehmoment, so daß damit die Gesamtanlage exakt ausgerichtet und mit Vorspannung zum Boden fundamentiert ist.

Zwei Ausführungsbeispiele der Erfindung sind in der Zeichnung dargestellt und im folgenden erläutert. Es zeigt:

Fig. 1 eine Seitenansicht einer Stütze mit einem Querschnitt durch einen Träger,

Fig. 2 eine Stirnansicht der Stütze,

Fig. 3 eine Draufsicht auf eine Stütze.

Fig. 4 ein liniendeckendes Roboterportal,

Fig. 5 ein flächendeckendes Roboterportal.

Auf dem Boden 1 einer Werkhalle ist eine Fußplatte 3 einer Stütze 4 mit Schrauben 6 verankert. Der Raum zwischen der Fußplatte 3 und dem Boden 1 ist nach dem Ausrichten der Träger 8 und der Stützen 4 des Roboterportals mit Mörtel 2 ausgegossen. Die Fußplatte 3 hat zwei Gewindebohrungen für Justierschrauben 5, die sich einerseits mittels Druckplatten 21 auf dem Boden 1 abstützen und andererseits die Stütze 4 in geforderter Höhe und Winkellage tragen.

. . . . . .

- 5 -

Weiterhin hat die Fußplatte 3 Löcher 3a, die zum horizontalen Verschieben der Stütze 4 entsprechend größer als der Durchmesser der Ankerschrauben 6 ausgebildet sind. Über diesen Löchern 3a liegen dicke Scheiben 7, mit deren Hilfe die Anschraubkräfte der Muttern der Ankerschrauben 6 auf die Fußplatte 3 übertragen werden.

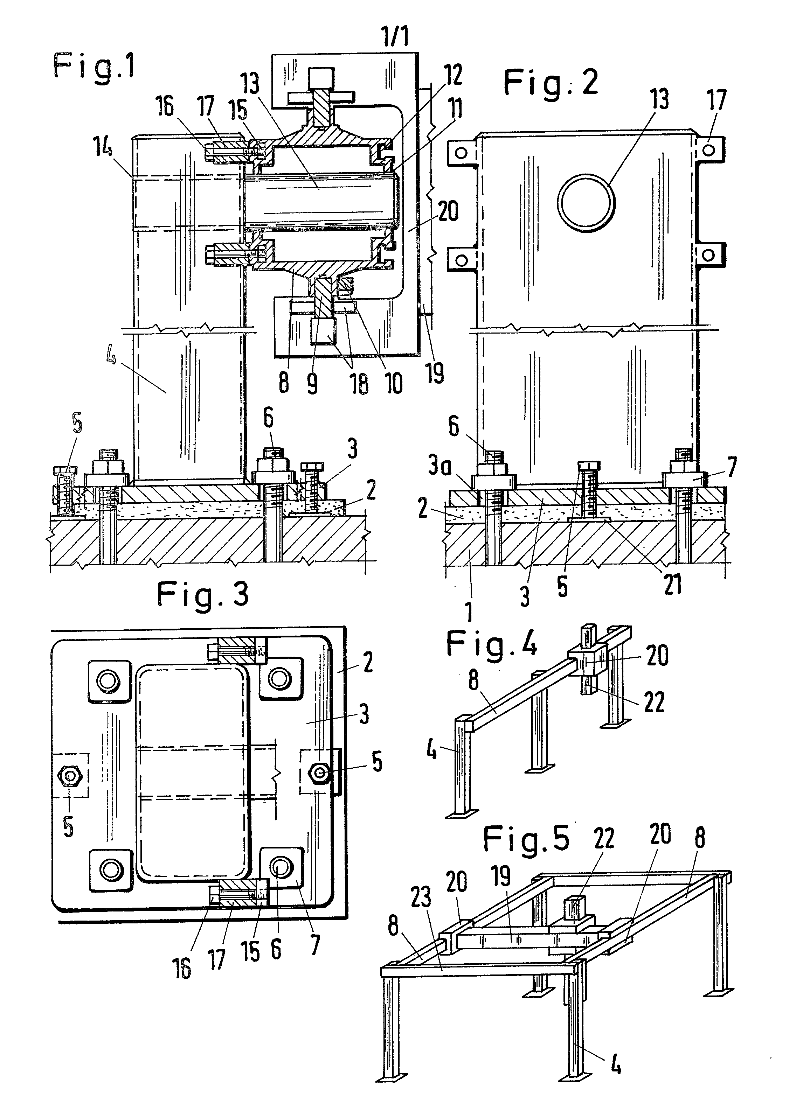

Beim Ausführungsbeispiel nach Fig. 4 tragen zwei Stützen 4 einen Träger 8, an dessen oberen und unteren Führungsschienen 9 ein Fahrwerk 20 mittels Führungsrollen 18 verfahrbar ist, das z.B. eine Vertikalhubachse trägt. Für den positiongenauen Antrieb des Fahrwerks 20 hat der Träger 8 eine Zahnstange 10, in die das Ritzel des Fahrwerkantriebes eingreift.

Weil das Fahrwerk 20 an den oberen und unteren Führungsschienen 9 des Trägers 8 geführt ist und der Träger 8, je nach Konzept, drei- oder mehrfach abgestützt wird, muß letzterer seitlich neben den Stützen 4 befestigt sein.

Beim Ausführungsbeispiel nach Fig. 5 tragen vier Stützen 4 zwei Träger 8, an deren oberen und unteren Führungsschienen 9 Fahrwerke 20 mittels Führungsrollen 18 verfahrbar sind, die einen Fahrschemel 19 mit einer Vertikalhubachse 22 tragen. Die Träger 8 werden mittels Querriegel 23 auf Distanz gehalten.

Wie bei Fig. 4 kann auch beim flächendeckenden Roboterportal nach Fig. 5 jeder Träger 8 mehrmals abgestützt sein oder als Kragarm über die Stützen 4 hinausragen und mittels der Querriegel 23 mit dem gegenüberliegenden Träger 8 verbunden sein.

- 6 -

Bei beiden Ausführungsbeispielen hat der Träger 8 einen Querdurchbruch 11 in Form einer Bohrung für einen rohrförmigen Querträger 13, der auch durch einen weiteren runden Durchbruch 14 der Stütze 4 geführt ist und dort eingeschweißt sein kann. Die Bohrungen haben einen Paßsitz für den Querträger, damit sich der Träger 8 nicht gegenüber den Stützen 4 verkantet.

Der Träger 8 hat im Bereich der oberen und unteren Gurte Einschiebenuten 12 für die Nutmuttern 15 von Schrauben 16, mit denen der Träger 8 an Anschraubsättel 17 der Stützen 4 befestigt ist. Die Anschraubsättel 17 werden nach dem Ausrichten des gesamten Roboterportals und dem Anziehen der Schrauben 16 mit den Stützen 4 verschweißt. Damit es nicht zu ungewollten Berührungen und Verspannungen zwischen den Stützen 4 und den Trägern 8 kommt, ragen die Anschraubsättel 17 zum Träger 8 hin über die Stützen 4 hinaus.

0247962

Abstützung eines Trägers

Patentansprüche:

1. Abstützung eines Trägers für ein Roboter-Portal
neben mehreren Stützen,
d a d u r c h   g e k e n n z e i c h n e t,
daß die Stützen (4) und/oder der Träger (8) an jeder
Verbindungsstelle einen runden Querdurchbruch (11, 14)
für einen den Träger (8) tragende runden Querträger
(13) haben.

2. Abstützung nach Anspruch 1,
d a d u r c h   g e k e n n z e i c h n e t,
daß der Träger (8) vorzugsweise ein Kastenträger ist.

3. Abstützung nach Anspruch 1,
d a d u r c h   g e k e n n z e i c h n e t,
daß der Träger (8) im oberen und unteren Bereich in
Längsrichtung verlaufende Einschiebenuten (12) für
Nutmuttern (15) oder die Köpfe von Schrauben (16) hat,
die durch an den Stützen (4) befestigte
Anschraubsättel (17) geführt sind.

4. Abstützung nach Anspruch 3,
d a d u r c h   g e k e n n z e i c h n e t,
daß die Anschraubsättel (17) zum Träger (8) hin über
die Stützen (4) vorstehen und stirnseitig am Träger
(8) im Bereich der Einschiebenuten (12) anliegen.

2

5. Abstützung nach den Ansprüchen 3 oder 4,
d a d u r c h   g e k e n n z e i c h n e t ,
daß die Anschraubsättel (17) nach dem Ausrichten der
Stützen (4) und Träger (8) mit den Stützen (4)
verschweißt sind.

6. Abstützung nach einem oder mehreren der vorgenannten
Ansprüche,
d a d u r c h   g e k e n n z e i c h n e t ,
daß der Träger (8) aus Leichtmetall hergestellt ist.

7. Abstützung nach einem oder mehreren der vorgenannten
Ansprüche,
d a d u r c h   g e k e n n z e i c h n e t ,
daß der Träger (8) auf dem Obergurt und unter dem
Untergurt Führungsschienen (9) für Führungsrollen (18)
eines Fahrwerkes (20) hat.

8. Abstützung nach einem oder mehreren der vorgenannten
Ansprüche,
d a d u r c h   g e k e n n z e i c h n e t ,
daß die Stützen (4) mit ihren Fußplatten (3) über
vorzugsweise zwei Justierschrauben (5) in der Höhe und
im Winkel ausrichtbar sind, wobei die Justierschrauben
(5) mittig zu beiden Seiten der Stütze (4) unter der
Längsachse des Querträgers (13) angeordnet sind und die
ausgerichteten Stützen (4) mittels Ankerschrauben (6)
oder Dübel arretierbar sind.

9. Abstützung nach Anspruch 8,
d a d u r c h   g e k e n n z e i c h n e t ,
daß die Fußplatten (3) mit mehreren Ankerschrauben (6)
oder Dübeln auf dem Boden (1) befestigt sind, daß
Löcher (3a) in den Fußplatten (3) zum horizontalen

0247962

3

Verschieben der Stütze (4) entsprechend größer sind als der Durchmesser der Ankerschrauben (6) und der Dügel und daß der Raum zwischen den Fußplatten (3) und den Bodenplatten (1) mit Mörtel (2) ausgegossen ist.

0247962

Fig.1 Fig.2 Fig.3 Fig.4 Fig.5